Europäisches Patentamt

European Patent Office

Office européen des brevets

(11) Publication number: **0 561 339 A1**

## EUROPEAN PATENT APPLICATION

(21) Application number: **93104245.1**

(22) Date of filing: **16.03.93**

(51) Int. Cl.⁵: **G06K 11/14**, B23D 21/10

(30) Priority: **17.03.92 JP 58566/92**

(43) Date of publication of application:
**22.09.93 Bulletin 93/38**

(84) Designated Contracting States:
**DE FR GB**

(71) Applicant: **SHARP KABUSHIKI KAISHA**
**22-22 Nagaike-cho Abeno-ku**
**Osaka 545(JP)**

(72) Inventor: **Tokishige, Masato**
**6-4-10-403, Daianji**
**Nara-shi, Nara-ken(JP)**
Inventor: **Kurimoto, Atsushi**
**4, Higashikanenaga-cho**
**Nara-shi, Nara-ken(JP)**
Inventor: **Inamoto, Kiyoshi**
**3-6-89, Shinkanaoka-cho**
**Sakai-shi, Osaka(JP)**
Inventor: **Ueda, Nobuyuki**
**492, Minosho-cho**
**Yamatokoriyama-shi, Nara-ken(JP)**
Inventor: **Shimazawa, Yoichi**
**5138-12, Naka-machi, Nara-shi**
**Nara-ken(JP)**

(74) Representative: **TER MEER - MÜLLER -**
**STEINMEISTER & PARTNER**
**Mauerkircherstrasse 45**
**D-81679 München (DE)**

(54) **Input device and method for calibration thereof.**

(57) An input device used for an image processing apparatus is disclosed. The input device of the invention includes: an operation panel through which, when a point on the operation panel is touched, vibrations are propagated from the point, the operation panel having a predetermined reference point; a plurality of sensors, disposed at a plurality of positions on the operation panel, for detecting the vibrations, each of the sensors outputting a detection signal at the detection of the vibration; and an arithmetic circuit for receiving the detection signal from each of the plurality of sensors, and for calculating a position vector of the touched point on the basis of the detection signals. The input device further includes position vector correcting means. The position vector correcting means has: a first memory for storing a reference position vector which represents the position of the reference point; means for calculating a difference between the reference position vector and a position vector of the reference point which is calculated on the basis of the detection signals output from the plurality of sensors after the reference point is touched; a second memory for storing the difference; and correcting means for correcting the position vector of the point which is calculated by the arithmetic circuit, based on the difference.

# Fig. 1

## BACKGROUND OF THE INVENTION

1. Field of the Invention:

The present invention relates to an input device for inputting data in response to points designated by touching a panel, and more particularly to an input device capable of correcting positional data of a touched point.

2. Description of the Related Art:

Various methods have bean in use for inputting data as signals.

For example, in an electronic apparatus, a key board is used for inputting information data. Each key on the key board is provided with a sensor (e.g., an electrical contact switch) for detecting the input.

In an image forming apparatus such as a copying machine, such a key board is provided in an operating section, and a signal input device is additionally provided. The signal input device is used for designating an area to be copied or an area not to be copied. There are various conventional methods for designating a specific area which include the following methods:

(1) An operator places an original to be copied on a lattice-scaled transparent sheet, and reads the scales on the X-axis and the Y-axis, so as to input the coordinate components by using numerical keys.

(2) Scales along the X-axis and the Y-axis are marked on a plate on which an original is placed (hereinafter, the plate is referred to as an original plate). Also in this method, an operator reads the scales, so as to input the coordinates of required points by using numerical keys.

(3) A switch array is provided on an original plate. In the switch array, switches are positioned at regular pitches along the X-axis and the Y-axis, respectively. Positional data of a point is input by operating the corresponding switches located at the point.

(4) A planar matrix array of sensors is provided separately from an original plate, for example, on a cover for covering an original. Positional data of a point is input by using an input pen or the like.

Methods (1) and (2) can be economically achieved, but are not efficient in operation. Method (3) is also inefficient in operation because it is necessary to input data for the X-axis and the Y-axis, respectively.

Method (4) is more efficient in operation than the other methods, but disadvantageously costly because of the expensive sensor matrix array. In addition, such an original plate must be completely transparent and exactly flat so as to avoid erroneous readings. For this reason, the sensor matrix array cannot be directly mounted on the original plate. Therefore, an additional plate must be separately used for placing an original and supporting the matrix array sensor. In this case, the original must be moved from the original plate to the additional plate, which causes a drawback.

Japanese Laid-open Patent Publication No. 63-244068 proposes a device in which such an original plate is used as an operation panel for designating an area to be copied of the original placed on the original plate. The device includes an input pen incorporating an oscillator and at least three vibration detectors around the original plate. When an operator touches the original plate with the input pen, the three detectors detect time intervals on the basis of reception of signals from the touched point, so as to specify the touched point. Means or structure for specifying the touched point is not specifically described in detail in the publication, but it is presumed that the cost will be reduced because the original plate itself is utilized as an operation panel, and the input device necessitates no additional key input device, matrix array and the like.

According to the area input device disclosed in the above-identified Japanese patent publication, a required area of the original can be designated by touching points. However in some cases, the designated area may not correspond to an actual area, which is caused by the production variety of individual copying machines or the like.

The area input device can detect the position of a touched point. However, in a case where a center position of an input coordinate system provided for the area input device is somewhat deviated from a center position of an original plate of an employed copying machine for the above reason, the detected position does not correspond to the actual position of the touched point. In another case where sensors for detecting vibrations from the touched point are not accurately disposed, the position of the touched point detected by the area input device does not correspond to the actual position.

As a result, an image processing is performed for an area which is not intended by the operator. When desired image processing items are to be input, but the touched point is not accurately detected, an erroneous image processing which is not intended is performed.

## SUMMARY OF THE INVENTION

The input device of this invention used for an image processing apparatus includes: an operation panel through which, when a point on the operation panel is touched, vibrations are propagated from the point, the operation panel having a predetermined reference point; a plurality of sensors, disposed at a plurality of positions on the operation panel, for detecting the vibrations, each of the sensors outputting a detection signal at the detection of the vibration; and arithmetic means for receiving the detection signal from each of the plurality of sensors, and for calculating a position vector of the touched point on the basis of the detection signals. The input device further includes position vector correcting means. The position vector correcting means has: first storing means for storing a reference position vector which represents the position of the reference point; means for calculating a difference between the reference position vector and a position vector of the reference point which is calculated on the basis of the detection signals output from the plurality of sensors after the reference point is touched; second storing means for storing the difference; and correcting means for correcting the position vector of the point which is calculated by the arithmetic means, based on the difference.

In an alternative example, the operation panel is a transparent panel having a first surface and a second surface opposite to the first surface, and an original is placed on the first surface.

In an alternative example, the point is a point on the first surface.

In an alternative example, the point is a point on the second surface.

In an alternative example, the first surface has a first area on which the original is placed and a second area on which the original is not placed, and the plurality of sensors are disposed at different positions in the second area.

In an alternative example, the plurality of sensors are disposed at different positions on the second surface.

In an alternative example, the reference point is on a center line of the first area.

In an alternative example, when the original is placed in the first area, the reference point is on a center line of the original.

According to another aspect of the invention, an input device used for an image processing apparatus is provided. The input device includes: a transparent panel having an original placement face on which an original is placed; a plurality of sensors, disposed at a plurality of different positions on the transparent panel, for detecting, aster a point on the original placement face is touched, vibrations from the point, each of the sensors outputting a detection signal at the detection of the vibration; and signal processing means for receiving the detection signal from each of the plurality of sensors, for calculating a time difference in vibration detection between the plurality of sensors, and for obtaining a position vector of the point based on the time difference. The input device further includes position vector correcting means, the position vector correcting means having: first storing means for storing a reference position vector which represents the position of a reference point on the original placement face; means for calculating a difference between the reference position vector and a position vector of the reference point which is calculated on the basis of the detection signals output from the plurality of sensors after the reference point is touched; second storing means for storing the difference as a position correcting vector; and transforming means for transforming the position vector of the point into an input vector of the point by performing a subtracting operation between the position vector of the point and the position correcting vector.

In an alternative example, the plurality of sensors are disposed in the periphery of the original placement face.

In an alternative example, the plurality of sensors are first, second, third and fourth sensors disposed in a clockwise manner, and a first line connecting the first and third sensors crosses a second line connecting the second and fourth sensors at right angles.

In an alternative example, the signal processing means calculates a first time difference in vibration detection between the first and third sensors and a second time difference in vibration detection between the second and fourth sensors, whereby the position vector of the point is calculated based on the first and second time differences.

According to an input device of the invention having the above construction, when a specific point on an operation panel is touched by a pen or the like, vibrations from the point are detected by sensors. Times at which the sensors detect the vibrations are obtained, and time differences are calculated, whereby a position vector of the touched point is acquired. Then, the position vector is interpreted and the touched point can be specified.

In the input device, before a specific point on the operation panel is touched, a predetermined reference point on the operation panel is touched. A position vector of the reference point obtained by calculation is stored as a correction vector. Thereafter, a certain point on the operation panel is touched and a position vector of the point is obtained. Then, a subtracting operation is performed between the position vector and the stored correction vector, so as to obtain a difference therebetween. The difference is processed as an input vector. Therefore, any deviation of the position vector detected by the sensors from the actual position vector of the touched point is corrected, whereby the actual position vector can be obtained.

In practice, components of a position vector of a point represent the coordinate components of the point, and components of a correction vector represent correction components. Components of an input vector of the point represent the coordinate components of the point to be actually input.

Especially in a case where a transparent plate (an original plate) on which an original is placed serves as the operation panel, a reference position for placing the original is used as a reference point. In this case, the reference position for placing the original is first touched, and a position vector representing the reference position is stored as a correction vector. Thereafter, a certain point on the original plate is touched, and a position vector of the point is obtained by calculation. Then, a subtracting operation is performed between the position vector and the correction vector. That is, the coordinates of the touched point with respect to the reference position are obtained. Therefore, it is possible to perform an accurate area designation on the original which is placed on the original plate, and moreover, it is possible to perform an image processing for the designated area.

Thus, the invention described herein makes possible the advantage of providing an input device which is capable, after a certain point on the operation panel is touched, of detecting the position of the touched point on an operation plane, and correcting the detected position, thereby accurately detecting the actually touched position.

This and other advantages of the present invention will become apparent to those skilled in the art upon reading and understanding the following detailed description with reference to the accompanying figures.

## BRIEF DESCRIPTION OF THE DRAWINGS

Figure 1 is a top view of a copying machine to which an input device according to the invention is applied.

Figure 2 illustrates the principle for obtaining the position of a touched point of the input device according to the invention.

Figure 3 is a time chart in which vibrations from the touched point are propagated to sensors.

Figure 4 is a block diagram schematically showing a circuit of the input device according to the invention.

Figure 5 is a flowchart illustrating a correction control of the input device according to the invention which is applied to the copying machine.

## DESCRIPTION OF THE PREFERRED EMBODIMENTS

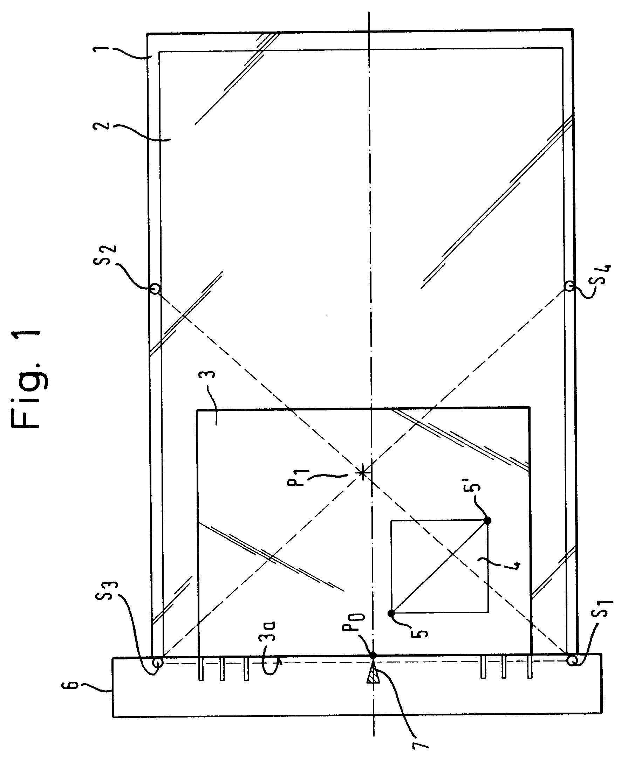

Figure 1 is a top view of a copying machine to which an input device of the invention is applied.

Referring to Figure 1, a table glass 1 which is made of a single transparent glass plate is disposed at a top face of the copying machine. An original 3 is placed on the table glass 1. In this example, the table glass 1 also functions as an operation panel for inputting data by touching. The table glass 1 includes an original placement area 2. Images on the original 3 can be copied as far as the images are positioned within the original placement area 2. Before the input for designating an image processing area, the original 3 is first placed in such a manner that a fade of the original 3 to be copied, i.e., an image face faces to upside. A square area having a line connecting two points 5 and 5' (hereinafter, the line is referred to as a line 5-5') as its diagonal line is a designated area 4 of the original 3. The designated area 4 is input by touching the two points 5 and 5'. After the input of the designated area 4 is completed, the original 3 is placed again so that the image face faces the table glass 1. Then, a desired image processing is performed.

A reference plate 6 which is used as a reference in a vertical direction when the original 3 is placed is provided so as to cover part of the table glass 1. An edge of the reference plate 6 is positioned on one end portion of the original placement area 2. The edge of the table glass 1 serves as a reference line along a vertical direction (the Y-axis) for placing the original 3 on the original placement area 2. The original 3 can easily be placed in position by applying a side 3a of the original 3 to the edge of the reference plate 6. A reference index 7 is provided on the reference line along the vertical direction. In this example, the reference index 7 indicates a crossing point of a center line (the X-axis) of the original placement area 2 and the reference line along the vertical direction.

Sensors $S_1$ - $S_4$ are directly stuck to a lower surface (or an upper surface) of the table glass 1 near the four corners of the table glass 1, respectively. The sensors $S_1$ - $S_4$ are detectors capable of detecting vibrations propagated through the table glass 1. The sensors $S_1$ - $S_4$ are provided for, when a certain point on the table glass 1 is touched, detecting the vibrations propagated from the touched point so as to detect the position of the touched point. When a point on the table glass 1 is touched, vibrations are propagated from the touched point to the sensors $S_1$ - $S_4$. Time periods required for the vibrations to reach the respective sensors $S_1$ - $S_4$ depend on distances in straight lines from the touched point to the respective sensors $S_1$ - $S_4$. Accordingly, for example, the position of a touched point with respect to the position of the reference index 7 (a point $P_O$), i.e., a position vector of the touched point can be obtained by calculation on the basis of the time periods from the touch of the point to the vibration detections of the sensors $S_1$ - $S_4$.

The area 4 of the original 3 can be designated as an image processing area, by touching points on the table glass 1. In a case shown in Figure 1 where a square area is designated as the area 4, the two points 5 and 5' on the original 3 are touched. As described above, position vectors of the two points 5 and 5' are obtained by calculation. The calculated position vectors are stored as position vectors for designating the area 4. Thus, the square area 4 having the line 5-5' as its diagonal line is designated as the image processing area.

The image processing includes trimming in which only the designated area is copied, masking in which the image in the designated area is masked and the remaining image is copied, and the like.

Moreover, in addition to the designation of the area for image processing, if the table glass 1 includes an input area having input sections for inputting copying conditions such as the number of copies or the like, desired copying conditions or the like can be input by touching any input sections related to the copying data as designating points.

A point is touched with any medium as far as it can apply vibrations to the table glass 1. Especially when an input pen including an oscillator which oscillates at a predetermined frequency is used, and the oscillator is designed to oscillate for a prescribed period by touching the table glass 1 with the input pen, the position of the touched point is detected more accurately.

In this example, the sensors $S_1$ - $S_4$ are disposed at positions out of the original placement area 2 of the table glass 1. The sensors $S_1$ - $S_4$ are disposed in such a manner that a line connecting the sensors $S_1$ and $S_3$ (hereinafter, referred to as a line $S_1$ - $S_3$) crosses a line connecting the sensors $S_2$ and $S_4$ - (hereinafter, referred to as a line $S_2$ - $S_4$) at right angles at a crossing point $P_1$. Distances from the crossing point $P_1$ to the respective sensors $S_1$ - $S_4$ are set to be equal. Moreover, in this example, in order to simplify the calculation for obtaining the position of the touched point, the vertical direction of the reference plate 6 is considered as the Y-axis, and the center line of the original placement area 2 is considered as the X-axis.

When the sensors $S_1$ - $S_4$ are disposed in the above-mentioned manner, there may occur some cases where the crossing point $P_1$ is not positioned on the center line of the original placement area 2 indicated by the reference index 7, i.e., the X-axis. The center line of the original placement area 2 is adjusted so that it corresponds to center lines of a sheet transporting system and an image forming system of the copying machine after the copying machine is assembled. It is presumed that the crossing point $P_1$ is somewhat deviated from the center line due to this adjustment. Figure 1 shows a case where the crossing point $P_1$ is somewhat deviated to the upper side from the center line.

Now, it is assumed that the point $P_O$ ($x_O$, $y_O$) positioned at the reference index 7 on the center line is the origin O. If the sensors $S_1$ - $S_4$ are accurately positioned and the crossing point $P_1$ is on the center line, the coordinates of the origin O ($x_O$, $y_O$) positioned at the reference index 7 is set to be (O, O). On the other hand, if the crossing point $P_1$ is deviated from the center line as is shown in Figure 1, the position of a touched point obtained by calculation is somewhat deviated from the actual position of the touched point.

Such deviation can be corrected in the following manner. The point $P_O$ at the position of the reference index 7 on the table glass 1 is touched by a pen or the like. The components of the position vector, i.e., the coordinates of the touched point $P_O$ are obtained and stored as reference coordinates. More specifically, prior to the input for area designation or the like for image processing, the point $P_O$ positioned at the reference index 7 is first touched by the pen or the like. The coordinates of the touched point $P_O$ are obtained by a method which is described below. The obtained coordinates are stored as correction components. Then, when a certain point on the table glass 1 is touched for designating the image processing area or the like, the coordinates of the touched point are obtained by a method which is described below. The obtained coordinates are corrected by using the above correction components.

In more detail, the point $P_O$ ($x_O$, $y_O$) positioned at the reference index 7 is touched. The coordinates of the touched point $P_O$ are obtained. The obtained coordinates are stored as the correction components. Next, if the origin O is touched, the coordinate components of the origin O are obtained. The above correction components, that is, the coordinate components of the point $P_O$ are subtracted from the obtained coordinates of the origin O, respectively. As a result, the coordinates of the origin O are accurately obtained. As is shown in Figure 1, since the point $P_O$ corresponds to the origin O, the coordinates of the origin O which are obtained as the result of the subtraction are (O, O). If a point P at a certain position on the table glass 1 is touched, the coordinates of the point P (x, y) are obtained. The coordinate components of the point $P_O$ ($x_O$, $y_O$) which are previously stored as the correction components are subtracted from the obtained coordinate components off the point P (x, y), respectively. As a result, the actual coordinates of the point P ($x-x_O$, $y-y_O$) are obtained. By performing the correction as described above, the position designated by the operator can be accurately recognized by the copying machine. Therefore, image processing exactly as intended by the operator can be performed.

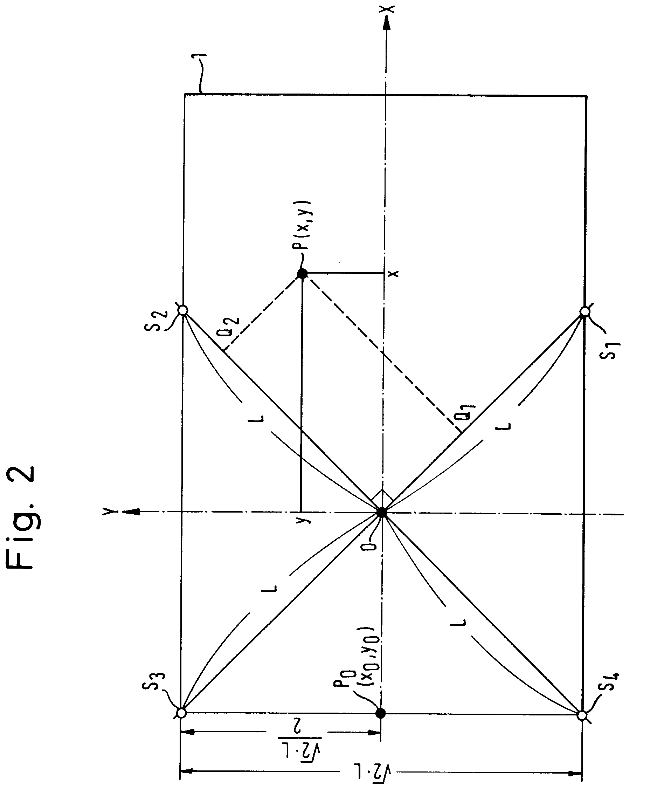

Next, a method of obtaining the coordinates of the certain point P on the table glass 1 is described with reference to Figure 2. It is assumed that the sensors $S_1$ - $S_4$ are disposed accurately in the above-mentioned manner, and that the crossing point $P_1$ of the line $S_1$ - $S_3$ and the line $S_2$ - $S_4$ is on the center line of the table glass 1. In order to simplify the explanation, the center line of the table glass 1 serves as the X-axis, and the Y-axis is determined so that the crossing point $P_1$ is positioned at the origin O (O, O). Accordingly, the line $S_1$ - $S_3$ is expressed by x = -y, and the line $S_2$ - $S_4$ is expressed by x = y. The coordinates of the point $P_O$ positioned at the reference index 7 on the center line are represented by ($x_O$, $y_O$).

The coordinates of the touched point P (x, y) are obtained by the following equations (1) and (2).

$$x = \frac{1}{\sqrt{2}} (Q_1 + Q_2) \qquad \cdots (1)$$

$$y = \frac{1}{\sqrt{2}} (-Q_1 + Q_2) \qquad \cdots (2)$$

In the equations (1) and (2), $Q_1$ and $Q_2$ are the coordinate components of the touched point P which are indicated by regarding the line $S_2$ - $S_4$ (x = y) and the line $S_1$ - $S_3$ (x = -y) as the Y-axis and the X-axis, respectively. The equations (1) and (2) transform the coordinates ($Q_1$, $Q_2$) into (x, y). The coordinates $Q_1$ and $Q_2$ are obtained by the following equations (3) and (4).

$$Q_1 = \pm \sqrt{\frac{B_1 \cdot B_2 \cdot (A_1 + A_2)}{|A_1 \cdot B_2 - A_2 \cdot B_1|}} \qquad \cdots (3)$$

$$Q_2 = \pm \sqrt{\frac{A_1 \cdot A_2 \cdot (B_1 + B_2)}{|A_1 \cdot B_2 - A_2 \cdot B_1|}} \qquad \cdots (4)$$

Constants $A_1$, $A_2$, $B_1$ and $B_2$ in the equations (3) and (4) are obtained by the following equations (5) through (8).

$$A_1 = \frac{L^2 - K_1^2}{2} \qquad \cdots (5)$$

$$A_2 = \frac{L^2 + K_2^2}{2} \qquad \cdots (6)$$

$$B_1 = \frac{L^2 + K_1^2}{2} \qquad \cdots (7)$$

$$B_2 = \frac{L^2 - K_2^2}{2} \qquad \cdots (8)$$

The values $K_1$ and $K_2$ are obtained by the following equations (9) and (10).

$$K_1 = \frac{T_1^2 \cdot v^2}{2} - L^2 \qquad \cdots (9)$$

$$K_2 = \frac{T_2^2 \cdot v^2}{2} - L^2 \qquad \cdots (10)$$

In the equations (9) and (10), v represents the propagating speed of the vibrations through the table glass 1. In the case where the table glass 1 is made of soda glass, the propagation speed is about 4,300 m/sec. In actual fact, the propagation speed of the vibrations is different between table glasses due to the difference in production process of the table glass (such the material, the production environment, etc.). Therefore, in order to precisely detect the coordinates of a touched point whichever table glass is used, the following operation operation is performed. A difference between a specific propagation speed (e.g., 4,300 m/sec. for soda glass) and the actual propagation speed is obtained. The difference is added to or subtracted from the specific propagation speed, so as to obtain the actual propagation speed v. The actual propagation speed is normally in the range of 3000 to 4500 m/sec.

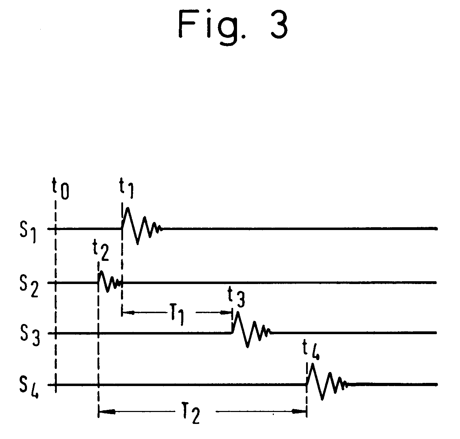

In the equations (9) and (10), L represents a distance between the origin O and each of the sensors $S_1$ - $S_4$, and $T_1$ and $T_2$ represent time differences in vibration detection between the sensors $S_1$ - $S_4$. In this example, a time difference in vibration detection between the sensors $S_1$ and $S_3$ is represented by $T_1$, and a time difference in vibration detection between the sensors $S_2$ and $S_4$ is represented by $T_2$. Figure 3 is a time chart after the point P on the table glass 1 is touched by the pen or the like, until the vibrations are propagated through the surface and/or the inside of the table glass 1 from the point P and detected by the respective sensors $S_1$ - $S_4$.

In Figure 3, $t_0$ represents a time when the point P is touched, and $t_1$ - $t_4$ represent times when the sensors $S_1$ - $S_4$ detect the vibrations, respectively.

Thus, the coordinates of the touched point P (x, y) can be obtained by using the time differences $T_1$ and $T_2$, the propagating speed v through the employed table glass 1 and the distance L between the origin O and each of the sensors $S_1$ - $S_4$ on the basis of the equations (1) through (10). The method of obtaining the coordinates of the point P (x, y) by calculation is described in more detail in Japanese Patent Application No. 3-188650.

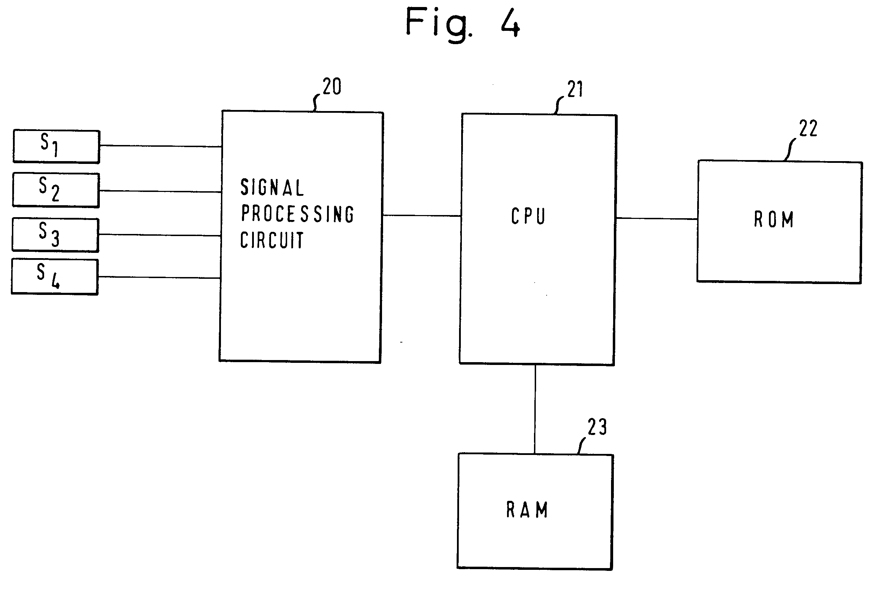

Figure 4 is a block diagram schematically illustrating the circuit configuration of the input device according to the invention.

The sensors $S_1$ - $S_4$ are elements for converting the vibrations into electric signals. For example, each of the sensors $S_1$ - $S_4$ may be a piezoelectric sensor, a strain sensor, a microminiature microphone or the like. Each of the sensors $S_1$ - $S_4$ outputs a detection signal when it detects the vibration. A signal processing circuit 20 receives the detection signals from the sensors $S_1$ - $S_4$. The signal processing circuit 20 starts and stops a time counting operation for measuring the time differences $T_1$ and $T_2$ in response to the detection signals. The time counting operation is performed, for example, by time counting means such as a timer. For example, the signal processing circuit 20 starts the counting operation of the timer at the

time $t_1$ when the signal processing circuit 20 receives the detection signal from the sensor $S_1$. Then, at the time $t_3$ when the signal processing circuit 20 receives the detection signal from the sensor $S_3$, the signal processing circuit 20 stops the counting operation of the timer. In a case where the sensor $S_3$ detects the vibration earlier than the sensor $S_1$, the counting operation of the timer is started in response to the detection signal from the sensor $S_3$ and stopped in response to the detection signal from the sensor $S_1$. The time counted by the timer indicates the time difference $T_1$. The time difference $T_2$ is measured in a similar manner.

By identifying the sensor which detects the vibration at the earliest time, it is determined that the touched point is positioned within a quadrant in which the identified sensor is disposed. Accordingly, the coordinate components obtained by the equations (3) and (4) can be determined to be positive or negative (in this example, the quadrant in which the sensor $S_1$ is disposed is assumed to be the first quadrant).

The aforesaid time counting means counts the time by 0.1 $\mu$sec. so as to allow a tolerance error in the range of $\pm 1$ mm for detecting the position of a touched point. If the table glass 1 is, for example, made of soda glass, a time period required for the vibration to propagate by 1 mm is as follows:

1 mm $\div$ 4,300 m/sec. $\fallingdotseq$ 0.23 $\mu$sec.

where 4,300 m/sec. is the acoustic wave propagating speed of soda glass. Therefore, if the time is counted by a shorter period than 0.23 $\mu$sec., the tolerance error can be reduced to 1 mm or less. This allows a count unit of about 0.1 $\mu$sec. which is half of the propagating time period.

The time differences $T_1$ and $T_2$ obtained by the signal processing circuit 20 are input into a control circuit (CPU) 21. The CPU 21 receives the times when the sensors $S_1$ - $S_4$ detect the vibrations, the time differences from the signal processing circuit 20 and the like. Then, the CPU 21 calculates the coordinates of the touched point P (x, y) on the basis of the above equations (1) through (10). A ROM 22 stores the above-mentioned specific propagation speed and the like, and a RAM 23 stores a correction value for correcting a propagation speed (a difference between the specific propagation speed and an actual propagation speed) and the like, if necessary. An actual propagation speed v is calculated by using the specific propagation speed stored in the ROM 22 and the correction value stored in the RAM 23. The coordinates of the touched point P are obtained by using the speed v and the time differences $T_1$ and $T_2$.

The procedure for obtaining the correction value for correcting the propagation speed which is stored in the RAM 23 is described by way of an example. First, a point from which the vibrations are detected by the sensors $S_1$ and $S_3$ with the time difference $T_1$ corresponding to 10.0 mm on the table glass 1 is determined, and the point is touched. At this time, based on the time difference $T_1$ output from the signal processing circuit 20, the CPU 21 calculates a distance on the table glass 1 corresponding to the time difference $T_1$. In the case where the specific propagation speed stored in the ROM 22 is 4,300 m/sec. and the calculated distance is 9.7 mm, the time difference $T_1$ in vibration detection between the sensors $S_1$ and $S_3$ is obtained as follows:

9.7 mm $\div$ 4,300 m/sec. $\fallingdotseq$ 2.26 $\mu$sec.

However, the distance on the table glass 1 corresponding to the dime difference of 2.26 $\mu$sec. should actually be 10.0 mm. In view of this, it is found that the actual propagation speed is obtained as follows:

10.0 mm $\div$ 2.26 $\mu$sec. $\fallingdotseq$ 4,425 m/sec.

Therefore, a value to be stored in the RAM 23 as the correction value for the propagation speed is obtained as follows:

4,425 m/sec. - 4,300 m/sec. = 125 m/sec.

The ROM 22 also previously stores arithmetic programs related to the equations (1) through (10), programs for controlling the copying operation, and the like. The CPU 21 performs the calculation for obtaining the coordinates of the touched point and the control of the copying operation in accordance with the programs stored in the ROM 22. The RAM 23 temporarily stores data or the like required in the CPU 21 and stores data of the time differences $T_1$ and $T_2$ and detection timings of the sensors $S_1$ - $S_4$ for identifying a sensor which detects the vibration at the earliest timing, and the like.

However, in a case where the crossing point $P_1$ of the line $S_1$ - $S_3$ and the line $S_2$ - $S_4$ is deviated from the center line, as is shown in Figure 1, the actual coordinates of the touched point cannot be obtained. For solving this problem, before points on the table glass 1 are touched for designating an image processing area, a reference point is touched. In this example, the reference point is a point $P_O$ on the table glass 1 positioned at the reference index 7. In a state where the crossing point $P_1$ is on the center line as is shown in Figure 2 and the crossing point $P_1$ is the origin O (hereinafter, this state is referred to as a normal state), the coordinate components of the point $P_O$ $(X_O, Y_O)$ are represented as follows:

$$\left( - \frac{\sqrt{2} \cdot L}{2} , \; 0 \right)$$

The reference point $P_O$ is touched and then the calculation is performed on the basis of the equations (1) through (10), by using the time differences $T_1$ and $T_2$ in vibration detection between the sensors $S_1$ - $S_4$. As a result of the calculation, the coordinates of the reference point $P_O$ $(x_O, y_O)$ are obtained. The calculated coordinate components $(x_O, y_O)$ are subtracted from the coordinate components of the coordinates of the reference point $P_O$ $(X_O, Y_O)$ in the normal state, respectively. The resulting differences between the respective components $(X_O-x_O, Y_O-y_O)$ are stored as correction components. Thereafter, when a point P is touched for designating an image processing area, the coordinate components of the touched point P $(x, y)$ obtained by the above equations (1) through (10) are subtracted from the correction components $(X_O-x_O, Y_O-y_O)$, respectively. As a result, the actual coordinates of the point P can be obtained.

In a case where the calculation is performed by regarding the point $P_O$ at the reference index 7 in Figure 1 as the origin O, the coordinates $(x_O, y_O)$ obtained by touching the point $P_O$ are directly stored as the correction components. In this case, when a certain point P is touched, the coordinate components of the point $P_O$ $(x_O, y_O)$ are subtracted from the calculated coordinate components of the point P $(x, y)$, respectively. As a result, the actual coordinates of the point P $(x-x_O, y-y_O)$ can be obtained.

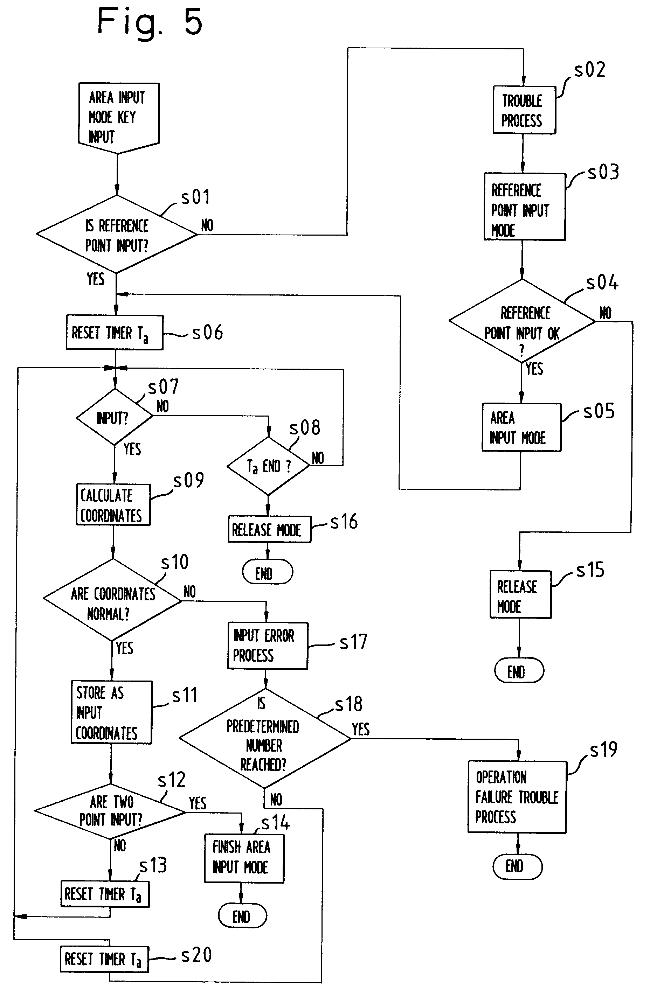

Figure 5 shows a control flowchart of the input device according to the invention which is applied to a copying machine.

First, when any one of the keys for inputting the kind of image processing which are provided on an operation panel of the copying machine is selected by the operator, the kind of image processing which corresponds to the selected key such as masking or trimming is input, and the input device is set into an area input mode. Then, the process shown in Figure 5 is started.

In step s01, it is judged whether the coordinate components of the reference point $P_O$, i.e., the correction components are stored in the RAM 23 or not. This judgment is performed by detecting the status of a prescribed position in the RAM 23, i.e., a flag F. The flag F is switched on, that is, the binary state of the flag F is changed from "O" to "1", when the reference point $P_O$ is touched and the coordinate components of the point $P_O$ $(x_O, y_O)$ calculated on the basis of the equations (1) through (10) are stored as the correction components. If the flag F is on, the process proceeds to step s06. If the flag F is not on, the process proceeds to step s02.

If it is judged in step s01 that the coordinate components of the reference point $P_O$ $(x_O, y_O)$ are not stored, a message which instructs the operator to input the position of the reference point $P_O$ is output as a trouble process (step s02). At this time, if a voice device for outputting a voice synthesized by a known voice synthesizing technique or a display apparatus is employed, such instruction is output by means of voice or display.

When the above message is output, the input device is set into a reference point input mode (step s03). The operator can perform an input operation (touch) of the reference point $P_O$ in the reference point input mode. When the reference point $P_O$ is touched, the coordinate components of the touched point $P_O$ are calculated on the basis of the equations (1) through (10) stored in the ROM 22 or the like. When the calculated components are stored as the correction components into a prescribed storage area in the RAM 23, the flag F is switched on.

When the device is set in the reference point input mode at step s03, it is judged whether the input operation of the reference point $P_O$ is finished or not (step s04). In step s04, the judgment is performed by detecting the status of the flag F, as in step s01. If the flag F is on, it is judged that the input operation of the reference point $P_O$ is finished, and the input device is set into the area input mode again (step s05). If the flag F is not on, the reference point input mode is released (step s15), and the copying machine is set in an input waiting state.

If it is judged that the input operation of the reference point $P_O$ is finished in step s01 or s04, a timer $T_a$ is reset (step s06). The timer $T_a$ counts time until the input operation for designating an area is started. The timer $T_a$ may have a resolution as high as several milliseconds (msec.). If, the time counted by the timer $T_a$

exceeds a predetermined time period, the area input mode is released and the copying machine is set into a normal mode. The predetermined time period of the timer $T_a$ is previously set to be 30 sec., 60 sec., or the like.

When the timer $T_a$ is reset as described above, it is judged whether the input operation for designating an area (touch) is performed or not in step s07. That is, in this step, it is judged whether the sensors $S_1$ - $S_4$ detect vibrations propagated from the touched point or not. If any one of the sensors detects the vibration, a timer $T_b$ for measuring the time differences $T_1$ and $T_2$ is started.

If it is judged in step s07 that the input operation is not performed, it is judged whether the timer $T_a$ counts the predetermined time period (e.g., 30 sec.) or not (step s08). If it is judged that the predetermined time period is not counted, the process returns to step s07. If it is judged that the predetermined time period is counted, the area input mode is released and the copying machine is set into the normal mode. The normal mode is a mode in a usable state (a ready state) after the copying machine is switched on and a warming-up operation for the copying machine is completed. In the normal mode, copying conditions such as a single copy, an isometric copy, and a standard image gradation are set.

If it is judged in step s07 that the input operation has been performed, the counting operation of the timer $T_b$ is started at the time when any one of the sensors detects the vibration. The timer $T_b$ is required to have a resolution of 0.1 msec. or more, unlike the timer $T_a$. In this example, the time differences $T_1$ and $T_2$ shown in Figure 3 are measured by the timer $T_b$. When the time differences $T_1$ and $T_2$ are measured, the calculation of the equations (1) through (10) is performed based on the measured time differences $T_1$ and $T_2$. Thus, the coordinate components of the touched point P (x, y) are obtained. The correction components scored in the prescribed storage area of the RAM 23 are subtracted from the obtained coordinate components. As a result, the actual coordinates of the point P $(x-x_O, y-y_O)$ are obtained (step s09).

In step s10, the actual coordinates of the point P are checked as to whether they indicate a point in an area capable of being designated, for example, in the original placement area 2 or not. Specifically, the coordinate components on a line defining the area capable of being designated are previously stored in the ROM 22 or RAM 23, and the actual coordinates of the point P are compared with the stored coordinate coordinates. If the actual coordinates of the point P do not belong to the area capable of being designated, an input error process is performed in step s17. In this input error process, the operator is instructed to perform the input operation again, and the number of input errors is counted.

When the above instruction is made in step s17, the number of re-input operations is checked as to whether it reaches a predetermined number in step s18. That is, in this step, it is checked as to whether the number of input error counts is the predetermined number or not. In this step, if it is judged that the predetermined number of input errors is reached, for example, the input error is the third one, the operator is made aware of the operation failure of the area designation input (step s19), and the input process is terminated. If the predetermined number of input errors is not reached, the timer $T_a$ is reset in step s20 and the process returns to step s07.

If it is judged in step s10 that the actual coordinates of the point P belong to the area capable of being designated (to the original placement area 2), the actual coordinates are stored into a prescribed area of the RAM 23 as input coordinates.

In step s12, it is judged whether the input coordinates of two points are stored or not. If the coordinates of only one point are stored, the timer $T_a$ is reset (step s13), and the input operation for the second point is detected (step s07). If the input coordinates of two points are already stored, it is judged that the input for area designation is completed (step s14), and the copying machine is set into a waiting state for the copying conditions. In this waiting state, the operator can input copying conditions such as the number of copies, and the magnification of the copy into the copying machine. Then, when the copying operation is started, the image processing such as trimming or masking is performed in accordance with the designated area which is input to the copying machine.

In this example, the input designated area is a square area having a line connecting two points of which the coordinates are stored as a diagonal line. In an alternative case, the input coordinates of three or more points are stored, end an area defined by lines connecting the points is input as the designated area.

As described above, the input device of the invention, in order to accurately specify the position of a touched point, the reference point $P_O$ positioned at the reference index 7 is touched before the area designation and after the assembling of the copying machine, for example, after the center line of the original placement area is set to correspond to the center line of the sheet transporting system. Then, the coordinate components of the reference point $P_O$ obtained by calculation are stored as correction components.

Alternatively, the reference point $P_O$ may be touched when the copying machine is switched on. Alternatively, the input operation of the reference point $P_O$ may be performed with every designation of the image processing area. In this case, when the input device is set into the area input mode, i.e., when the kind of the image processing such as masking or trimming is input by the operator, the input device is first set into the reference point input mode. When the input operation of the reference point $P_O$ is performed, the mode of the input device returns to the area input mode, whereby the operator can input the designated area.

Even in the case where the original 3 is placed in such a manner that the center thereof is somewhat deviated from the reference index 7 of the reference plate 6, an image processing area can be accurately designated by performing the input operation of the reference point $P_O$ for every designation. First, before an area on the image face of the original 3 is designated, a point of the original 3 corresponding to the reference index 7 is touched as a reference point. The coordinate components of the reference point are stored as correction components. Next, points are touched for designating an area on the image face of the original 3 which is deviated. The coordinate components of the touched points are calculated. The coordinate components are corrected by using the above correction components, whereby the designated area can be accurately recognized. After the input for the area designation is completed by the above procedure, the original 3 is placed again so that the image face faces the table glass 1. At this time, the operator only have to place the original 3 in such a manner that the center line of the original 3 coincides with the center line of the original placement area 2, whereby an image processing can be performed for the area which is accurately designated.

According to the input device of the invention, a reference point is touched before the input operation for designating an image processing area. The obtained coordinate components of the reference point are stored as correction components. Thereafter, the coordinate components of a point which is touched to input the designated area are corrected by using the stored correction components, whereby the actual coordinates of the touched point can be obtained.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

**Claims**

1. An input device used for an image processing apparatus, said input device comprising:

   an operation panel through which, when a point on said operation panel is touched, vibrations are propagated from said point, said operation panel having a predetermined reference point;

   a plurality of sensors, disposed at a plurality of positions on said operation panel, for detecting the vibrations, each of said sensors outputting a detection signal at the detection of the vibration; and

   arithmetic means for receiving said detection signal from each of said plurality of sensors, and for calculating a position vector of said touched point on the basis of said detection signals,

   said input device further comprising position vector correcting means, said position vector correcting means having:

   first storing means for storing a reference position vector which represents the position of said reference point;

   means for calculating a difference between said reference position vector and a position vector of said reference point which is calculated on the basis of said detection signals output from said plurality of sensors after said reference point is touched;

   second storing means for storing said difference; and

   correcting means for correcting said position vector of said point which is calculated by said arithmetic means, based on said difference.

2. An input device according to claim 1, wherein said operation panel is a transparent panel having a first surface and a second surface opposite to said first surface, and an original is placed on said first surface.

3. An input device according to claim 2, wherein said point is a point on said first surface.

4. An input device according to claim 2, wherein said point is a point on said second surface.

5. An input device according to claim 2, wherein said first surface has a first area on which said original is placed and a second area on which said original is not placed, and said plurality of sensors are disposed at different positions in said second area.

6. An input device according to claim 2, wherein said plurality of sensors are disposed at different positions on said second surface.

7. An input device according to claim 5, wherein said reference point is on a center line of said first area.

8. An input device according to claim 7, wherein, when said original is placed in said first area, said reference point is on a center line of said original.

9. An input device used for an image processing apparatus, said input device comprising:
a transparent panel having an original placement face on which an original is placed;
a plurality of sensors, disposed at a plurality of different positions on said transparent panel, for detecting, after a point on said original placement face is touched, vibrations from said point, each of said sensors outputting a detection signal at the detection of the vibration; and
signal processing means for receiving said detection signal from each of said plurality of sensors, for calculating a time difference in vibration detection between said plurality of sensors, and for obtaining a position vector of said point based on said time difference,
said input device further comprising position vector correcting means, said position vector correcting means having:
first storing means for storing a reference position vector which represents the position of a reference point on said original placement face;
means for calculating a difference between said reference position vector and a position vector of said reference point which is calculated on the basis of said detection signals output from said plurality of sensors after said reference point is touched;
second storing means for storing said difference as a position correcting vector; and
transforming means for transforming said position vector of said point into an input vector of said point by performing a subtracting operation between said position vector of said point and said position correcting vector.

10. An input device according to claim 9, wherein said plurality of sensors are disposed in the periphery of said original placement face.

11. An input device according to claim 10, wherein said plurality of sensors are first, second, third and fourth sensors disposed in a clockwise manner, and a first line connecting said first and third sensors crosses a second line connecting said second and fourth sensors at right angles.

12. An input device according to claim 11, wherein said signal processing means calculates a first time difference in vibration detection between said first and third sensors and a second time difference in vibration detection between said second and fourth sensors, whereby said position vector of said point is calculated based on said first and second time differences.

# Fig. 1

EP 0 561 339 A1

# Fig. 2

EP 0 561 339 A1

# Fig. 3

# Fig. 4

EP 0 561 339 A1

# Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>Y | EP-A-0 333 219 (CANON KABUSHIKI KAISHA)<br>* page 2, line 14 - line 55 *<br>* page 3, line 19 - page 4, line 34 *<br>* page 5, line 36 - page 7, line 12;<br>figures *<br>--- | 1,9-11<br>2-8,12 | G06K11/14 |
| Y<br>A | EP-A-0 474 232 (SHARP KABUSHIKI KAISHA)<br>* page 3, line 53 - page 4, line 18 *<br>* page 4, line 44 - page 8, line 55 *<br>* page 9, line 39 - page 10, line 5;<br>figures *<br>--- | 2-8,12<br>1,9-11 | |
| Y<br>A | US-A-4 853 494 (SUZUKI)<br>* column 1, line 9 - column 2, line 49 *<br>* column 4, line 10 - column 8, line 34;<br>figures 2-9 *<br>----- | 4<br>1-3,9,12 | |
| | | | TECHNICAL FIELDS SEARCHED (Int. Cl.5 ) |
| | | | G06K<br>G06F |

The present search report has been drawn up for all claims

| Place of search | Date of completion of the search | Examiner |
|---|---|---|
| THE HAGUE | 27 MAY 1993 | SEMPLE M. |

EPO FORM 1503 03.82 (P0401)